# EUROPÄISCHE PATENTSCHRIFT

(11) **EP 3 167 192 B1**
(45) Veröffentlichungstag und Bekanntmachung des Hinweises auf die Patenterteilung: **25.04.2018**
(21) Anmeldenummer: 15723845.2
(22) Anmeldetag: 23.05.2015
(51) Int. Cl.: F04B 43/073, F01N 3/20

(54) **EINRICHTUNG ZUR BEREITSTELLUNG VON UNTER EINEM VORGEBBAREN DRUCK STEHENDEN FLUIDEN**
DEVICE FOR PROVIDING FLUIDS UNDER A PREDETERMINABLE PRESSURE
DISPOSITIF POUR FOURNIR DES FLUIDES SE TROUVANT SOUS UNE PRESSION APTE À ÊTRE PRÉDÉTERMINÉE

(30) Priorität: 08.07.2014 DE 102014010119
(43) Veröffentlichungstag der Anmeldung: 17.05.2017
(73) Patentinhaber: Hydac Electronic GmbH, 66128 Saarbrücken (DE)
(72) Erfinder: KATTLER, Frank, 66346 Püttlingen (DE); MANNEBACH, Horst, 66127 Saarbrücken (DE); HEROLD, Frank, 66129 Saarbrücken (DE); GROH, Christian, 66453 Gersheim (DE); KORN, Jerome, 67655 Kaiserslautern (DE)
(74) Vertreter: Bartels und Partner, Patentanwälte
(86) Internationale Anmeldenummer: PCT/EP2015/001066
(87) Internationale Veröffentlichungsnummer: WO 2016/005018

(56) Entgegenhaltungen:
- GB-A- 1 379 594
- US-A- 2 667 129

## Beschreibung

Die Erfindung betrifft eine Einrichtung zur Bereitstellung von unter einem vorgebbaren Druck stehenden Fluiden für die Druckversorgung eines Abnehmers, wie einer Arbeitseinheit eines SCR (Selective Catalytic Reduction)-Systems zur Abgasbehandlung von Verbrennungsmotoren, mit den Merkmalen im Oberbegriff von Anspruch 1.

Einrichtungen dieser Art sind Stand der Technik. Als Pumpen vom Verdrängertyp kommen üblicherweise Kolbenpumpen zum Einsatz, wobei der im Pumpenzylinder befindliche Kolben mittels einer Antriebseinrichtung mechanisch antreibbar ist. Das Dokument DE 10 2012 016 631 A1 offenbart eine Einrichtung der eingangs genannten Gattung, mittels deren ein betreffender Abnehmer mit unter Druck stehendem Fluid versorgbar ist, beispielsweise eine Harnstofflösung unter einem gegebenen Versorgungsdruck dem Einspritzventil eines SCR-Systems zuführbar ist. Bei der erwähnten, bekannten Einrichtung, bei der mehr als eine Kolbenpumpe vorgesehen ist, um stärkere Schwankungen des Versorgungsdrucks zu vermeiden, sind für den Antrieb der Pumpenkolben Betätigungsmagnete vorgesehen, die als sog. "drückende" Magnete bei Bestromung den Förderhub des jeweiligen Kolbens bewirken, während eine Rückstellfeder bei fehlender Bestromung den Ansaughub des Kolbens veranlasst.

Die elektromagnetische Betätigung jeweiliger Pumpenkolben gestaltet sich verhältnismäßig aufwendig, insbesondere ergibt sich ein entsprechender baulicher Aufwand, wenn mehr als eine Pumpe vorgesehen ist. In diesem Fall ist auch ein entsprechender Steueraufwand für die Synchronisation der Kolbenbewegungen erforderlich.

Die GB 1 379 594 und die US 2 667 129 beschreiben jeweils eine gattungsgemäße Einrichtung zur Bereitstellung von unter einem vorgebbaren Druck stehenden Fluiden für die Druckversorgung eines Abnehmers, wie einer Arbeitseinheit eines SCR-Systems zur Abgasbehandlung von Verbrennungsmotoren, mit mindestens einer das betreffende Fluid aus einem Fluidvorrat entnehmenden und dem Abnehmer zuführenden Pumpe, die ein Verdrängerelement aufweist, das zur Erzeugung des Fluiddrucks in einem Arbeitsraum bewegbar ist, wobei das Verdrängerelement der jeweiligen Pumpe mit seiner vom Arbeitsraum des Fluids abgewandten Seite an einen zweiten Arbeitsraum angrenzt, zu dem ein die Bewegung des Verdrängerelements bewirkendes Druckmedium zuführbar ist, wobei die jeweilige Pumpe als bewegbares Verdrängerelement eine den ersten und den zweiten Arbeitsraum voneinander trennende, bewegbare Membran aufweist, und wobei eine Pumpeneinheit mit zwei Membranpumpen vorgesehen ist, deren Membrane miteinander mechanisch gekoppelt und deren erste und zweite Arbeitsräume derart angeordnet sind, dass dem Förderhub der einen Membran der Ansaughub der jeweils gekoppelten anderen Membran und umgekehrt entspricht.

Ausgehend von diesem Stand der Technik stellt sich die Erfindung die Aufgabe, eine Einrichtung der eingangs genannten Art zur Verfügung zu stellen, die sich bei einfachem Aufbau durch ein gutes und effizientes Betriebsverhalten auszeichnet.

Erfindungsgemäß ist diese Aufgabe durch eine Einrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die mechanische Kopplung der Membrane derart kraftschlüssig ausgebildet ist, dass eine Volumenvergrößerung des ersten Arbeitsraums jeder Membranpumpe gegen den Kraftschluss ohne Verkleinerung des ersten Arbeitsraums der jeweils anderen Membranpumpe ermöglicht ist.

Dadurch sind die Pumpen, wenn sie als Druckerzeuger für Fluide vorgesehen sind, die gefrierbar sind, wie dies bei den wasserbasierten Harnstofflösungen von SCR-Systemen der Fall ist, gegen Beschädigung bei Gefriertemperaturen geschützt, weil die bei einem Gefrieren des in den ersten Arbeitsräumen befindlichen Fluids auftretenden Volumenvergrößerungen durch Bewegungen der jeweiligen Membran kompensierbar sind, weil diese nicht starr miteinander verbunden, sondern kraftschlüssig gekoppelt sind.

Das Verdrängerelement der jeweiligen Pumpe grenzt mit seiner vom Arbeitsraum des Fluids abgewandten Seite an einen zweiten Arbeitsraum an, zu dem ein die Bewegung des Verdrängerelements bewirkendes Druckmedium zuführbar ist. Dadurch, dass dergestalt der Antrieb des Verdrängerelements in die jeweilige Pumpe integriert ist, indem das Verdrängerelement unmittelbar von einem in einem zweiten Arbeitsraum herrschenden Medium druckbeaufschlagt wird, kommen externe Antriebe, wie Betätigungsmagnete, in Wegfall, so dass die erfindungsgemäße Einrichtung mit verringertem baulichen Aufwand und Steuerungsaufwand realisierbar ist.

Im Vergleich zu einer Kolbenpumpe ist die Membranpumpe in mehreren Hinsichten vorteilhaft. Eine Membran lässt sich großflächig gestalten, ohne dass zwischen ihr und der Wand des Arbeitsraums Reibungskräfte entstehen. Um mit dem Kolben einer Kolbenpumpe vergleichbar große druckwirksame Flächen zu realisieren, wären große Zylinder- und Kolbendurchmesser erforderlich mit entsprechend hohen Reibungsverlusten an der Zylinderwand. Zudem kann eine Membran mit elastomeren Bestandteilen mehr oder weniger stark selbstrückstellend sein. Da die träge Masse einer Membran wesentlich geringer ist als diejenige eines Pumpenkolbens gleich großer druckwirksamer Fläche, sind für eine Membran wesentlich geringere Rückstellkräfte als für einen Pumpenkolben erforderlich. Im Vergleich zu Kolbenpumpen, bei denen für einen sicheren Betrieb bei hohen Taktfrequenzen Rückstellfedern entsprechend großer Federhärte erforderlich sind, die bei jedem Förderhub überwunden werden muss, zeichnen sich Membranpumpen demgegenüber durch eine bessere Energiebilanz aus und sind für die aggressive und sehr kriechfähige Harnstofflösung besser geeignet.

Es sind zwei Membranpumpen vorgesehen, deren Membrane miteinander mechanisch gekoppelt und deren erste und zweite Arbeitsräume derart angeordnet sind, dass dem Förderhub der einen Membran der Ansaughub der gekoppelten, anderen Membran und umgekehrt entspricht. Dadurch erfolgt die Erzeugung des Versorgungsdrucks im Gegentaktbetrieb und daher entsprechend gleichmäßig. Die Kopplung der Membrane führt ohne zusätzliche Steuerungsmaßnahmen zu synchronem Betrieb.

In besonders vorteilhafter Weise kann als dem zweiten Arbeitsraum der jeweiligen Pumpe zuführbares Druckmedium ein Druckfluid vorgesehen sein. Anstelle der hydraulischen Betätigung könnte auch eine pneumatische Betätigung mittels eines gasförmigen Druckmediums vorgesehen sein. Die hydraulische Betätigung, die im Vergleich zu pneumatischer Betätigung eine wesentlich kompaktere Bauweise ermöglicht, ist in vielen Fällen auch deshalb vorteilhafter, weil bei den in Frage kommenden Anwendungen, wie bei Einrichtungen, die mit Verbrennungsmotoren und zugehörigen SCR-Systemen ausgerüstet sind, etwa bei Fahrzeugen oder Arbeitsgerätschaften, üblicherweise Druckfluide systembedingt zur Verfügung stehen, sei es Hydrauliköl, unter Betriebsdruck stehendes Schmieröl oder dergleichen, also Druckflüssigkeiten, die unmittelbar zur Druckmittelbetätigung des jeweiligen Verdrängerelements einer Pumpe nutzbar sind.

Bei besonders vorteilhaften Ausführungsbeispielen kann für einen hydraulischen Antrieb der jeweiligen Pumpe eine Antriebseinheit vorgesehen sein, die eine Hydropumpe und eine die Druckflüssigkeitszufuhr zur Pumpe zeit- und/oder viskositätsabhängig steuernde Ventilanordnung aufweist.

Bei besonders vorteilhaften Ausführungsbeispielen weist die Ventilanordnung der Antriebseinheit ein 4/2-Wegeventil auf, mittels dessen die Druckseite der Hydropumpe im Wechsel mit dem zweiten Arbeitsraum der einen oder der anderen Membranpumpe verbindbar ist.

Mit besonderem Vorteil kann die Anordnung hierbei so getroffen sein, dass das 4/2-Wegeventil mittels eines Steuerventils hydraulisch betätigbar ist, das seinerseits in Abhängigkeit von der Bewegung der Membrane der Pumpen mechanisch betätigt ist, um den Druck der Druckseite der Hydropumpe als Steuerdruck im Wechsel an die eine oder die andere Stirnseite des Ventilschiebers des 4/2-Wegeventils zu melden. Das Steuerventil kann als Wegeventil in Schieberbauart ausgebildet sein, das an eine jeweilige Membranpumpe derart angebaut ist, dass der Ventilschieber unmittelbar durch die Bewegung der betreffenden Membran bewegbar ist.

Um sicherzustellen, dass bei jeder Stellung des Steuerventils, z.B. bei einem Betriebsstart der Einrichtung, das 4/2-Wegeventil in eine definierte Schaltstellung kommt, bei der eine Auslenkbewegung der Membrane durch Druckmittelzufuhr zum zweiten Arbeitsraum einer der Membrane erfolgt, ist die Anordnung derart getroffen, dass das 4/2-Wegeventil der Antriebseinheit an den Stirnseiten seines Ventilschiebers, die mit dem vom Steuerventil zugeführten Steuerdruck beaufschlagbar sind, unterschiedlich große druckwirksame Kolbenflächen aufweist oder dass an einer Stirnseite zusätzlich zum Steuerdruck eine Federkraft wirksam ist. Dadurch ist vermieden, dass weder bei an beiden Stirnseiten fehlendem noch bei an beiden Stirnseiten gleich hohem herrschendem Steuerdruck sich das Ventil der Antriebseinheit in einer undefinierten Zwischenlage befinden kann.

Die Taktfrequenz für den Betrieb wird über den Volumenstrom der Hydraulikpumpe vorgegeben. Die durch das 4/2-Wegeventil gebildeten Drosselstellen dienen der Feinabstimmung des Umschaltvorganges.

Nachstehend ist die Erfindung anhand eines in der Zeichnung dargestellten Ausführungsbeispiels im Einzelnen erläutert. Es zeigen:
- Fig. 1: teilweise in schematisch vereinfachter Schnittdarstellung und teilweise in Symboldarstellung ein Ausführungsbeispiel der erfindungsgemäßen Einrichtung; und
- Fig. 2: einen in demgegenüber größeren Maßstab gezeichneten Längsschnitt des Pumpen- und Ventilblocks des Ausführungsbeispiels von Fig. 1.

Die Erfindung ist unter Bezug auf die Zeichnung anhand eines Ausführungsbeispiels erläutert, bei dem mittels der Einrichtung die Arbeitseinheit 1 eines AdBlue®-Systems mit einem unter einem vorgegebenen Versorgungsdruck stehenden Fluid, in diesem Fall mit einer wässrigen Harnstofflösung, zu versorgen ist. Die Arbeitseinheit 1 weist in der bei SCR-Systemen üblichen Weise eine elektronische Steuereinrichtung auf, die nach Maßgabe des jeweiligen Betriebszustandes eines Verbrennungsmotors (nicht dargestellt) das unter Versorgungsdruck stehende Fluid in dosierten Einspritzmengen einer Einspritzeinrichtung 3 zuführt, die das Fluid in den Abgasstrom einleitet. Zur Druckversorgung der Arbeitseinheit 1 weist die Einrichtung eine Pumpeneinheit 5 auf, die das Fluid aus einem AdBlue®-Vorratstank 7 entnimmt und über eine Saugleitung 9 zur Saugseite 11 der Pumpeneinheit 5 zuführt. Von der Druckseite 13 gelangt das unter Versorgungsdruck stehende Fluid über eine Druckleitung 15 und ein Filter 17 zum Versorgungsstrang der Arbeitseinheit 1, der eine Eingangsleitung 19 und eine Ausgangsleitung 21 aufweist. Letztere ist über ein auf den gewünschten Versorgungsdruck eingestelltes Druckbegrenzungsventil 23 mit dem AdBlue®-Vorratstank 7 in Verbindung.

Die Pumpeneinheit 5 ist mittels eines die Antriebsenergie liefernden Druckmediums betätigbar, wobei im vorliegenden Fall eine Hydraulikflüssigkeit zur Betätigung der Pumpeneinheit 5 vorgesehen ist. Beim gezeigten Ausführungsbeispiel ist hierfür eine Antriebseinheit 25 vorgesehen, die eine motorisch antreibbare Hydropumpe 27 aufweist, die über einen Vorlauffilter 29 Hydrauliköl aus einem Tank 31 entnimmt. Die Druckseite 33 der Hydropumpe 27 ist über ein Druckbegrenzungsventil 35 zu einer Tankrücklaufleitung 37 hin abgesichert, in der sich ein Rücklauffilter 39 befindet. Für die Steuerung des Betriebs der Pumpeneinheit 5 weist die Antriebseinheit 25 eine Ventilanordnung in Form eines 4/2-Wegeventils 41 vom Schieberventiltyp auf, über das die Pumpeneinheit 5, die zwei miteinander gekoppelte Membranpumpen 43 und 45 aufweist, hydraulisch mittels der von der Hydropumpe 27 gelieferten Druckenergie betätigbar ist.

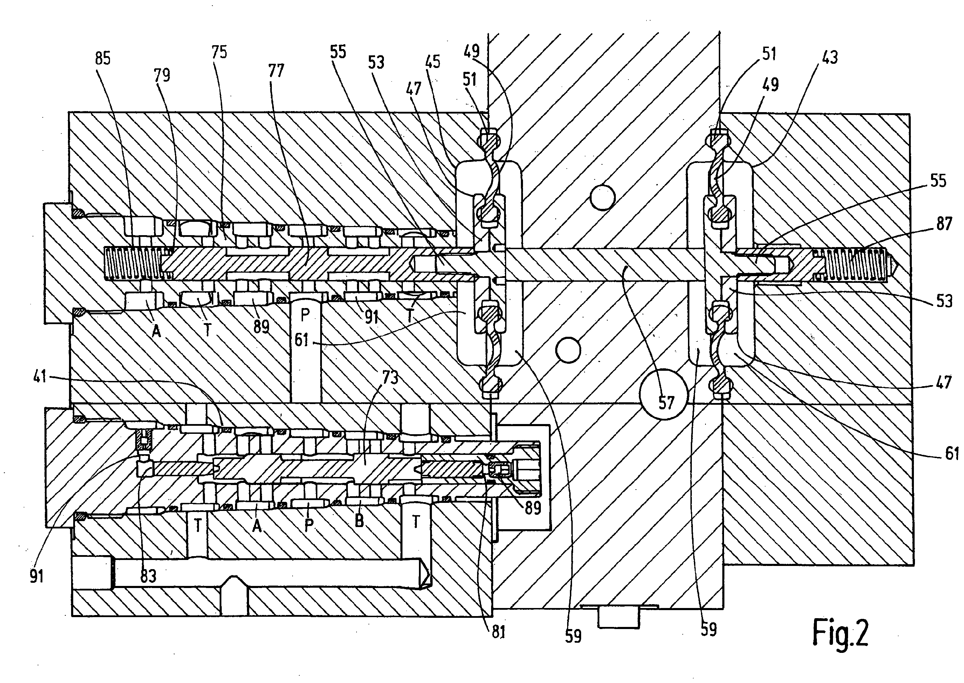

Die gleich ausgebildeten Membrane 47 jeder Membranpumpe 43, 45 weisen jeweils einen elastomeren Außenring 49 auf, der, wie am besten aus Fig. 2 zu ersehen ist, mit seinem radial außenliegenden Randwulst 51 am Ventilgehäuse und am radial inneren Rand mit einem metallischen Zentralteller 53 verbunden ist. Jeder Zentralteller 53 weist einen koaxial vorstehenden Zapfen 55 auf, die von den Membrane 47 an den voneinander abgewandten Seiten vorspringen. Mit ihrer von den Zapfen 55 abgewandten, glatten Seite liegen die Zentralteller 53 jeweils an einer sich koaxial zu den Zapfen 55 erstreckenden Koppelstange 57 an.

Jede Membran 47 bildet bei jeder Membranpumpe 43, 45 das bewegbare Trennelement zwischen einem ersten Arbeitsraum 59 und einem zweiten Arbeitsraum 61. Die ersten Arbeitsräume 59 befinden sich an der der Koppelstange 57 zugewandten Seite des Zentraltellers 53, sind daher einander zugewandt. Diese ersten Arbeitsräume 59 enthalten im Betrieb das zu pumpende Fluid, im vorliegenden Fall also die Harnstofflösung für das SCR-System. Die zweiten Arbeitsräume 61 enthalten im Betrieb das die Auslenkbewegungen der jeweiligen Membran 47 bewirkende Druckmedium, hier die von der Antriebseinheit 25 zur Verfügung gestellte Druckflüssigkeit. Die über die Saugleitung 9 mit dem AdBlue®-Vorratstank 7 verbundene Saugseite 11 der Pumpeneinheit 5 ist über je ein Saugventil 63 mit dem ersten Arbeitsraum 59 jeder Membranpumpe 43, 45 verbunden. Zwischen der Druckseite 13 der Pumpeneinheit 5 und dem ersten Arbeitsraum 59 der Membranpumpen 43, 45 befindet sich je ein Auslassventil 65. Hin- und hergehende Auslenkbewegungen der Membrane 47, die durch die Anlage an der Koppelstange 57 gemeinsam erfolgen, bewirken so einen Saughub der einen Membran 43 oder 45 und gleichzeitig einen Förderhub der anderen Membran 43 oder 45. Sowohl das Saugventil 63 als auch das Auslassventil 65 sind von ihrer Bauart her Rückschlagventile.

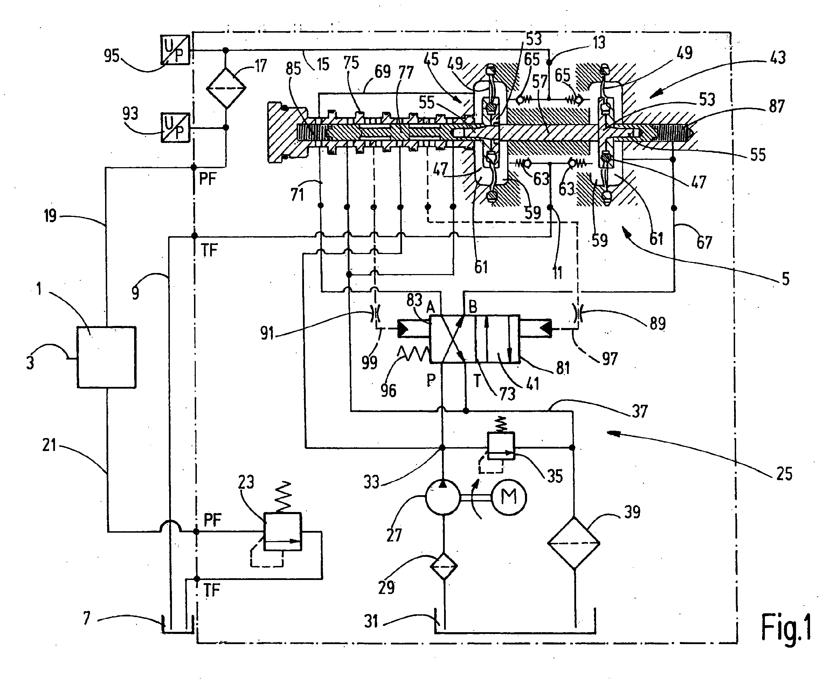

Für die entsprechende hydraulische Betätigung der Pumpeneinheit 5 sind über das Wegeventil 41 der Antriebseinheit 5 abwechselnd die zweiten Arbeitsräume 61 der Membranpumpen 43, 45 mit der Druckseite 33 der Druckpumpe 27 und mit der Tankrücklaufleitung 37 verbindbar. Bei der in den Figuren dargestellten Schaltstellung des Wegeventils 41 ist dessen mit der Druckseite 33 verbundener Anschluss P über den Arbeitsanschluss B und eine Leitung 67 mit dem zweiten Arbeitsraum 61 der Membranpumpe 43 in Verbindung. Der zweite Arbeitsraum 61 der anderen Membranpumpe 45 ist hierbei über Leitungsteile 69 und 71 mit dem anderen Arbeitsanschluss A des Wegeventils 41 und über dessen Tankanschluss T mit der Tankrücklaufleitung 37 in Verbindung. Entsprechend ergeben sich durch den im zweiten Arbeitsraum 61 der Membranpumpe 43 herrschenden Antriebsdruck ein Förderhub der Membran 47 und ein entsprechender Förderdruck an der Druckseite 13. Gleichzeitig wird über die Koppelstange 57 die Membran 47 der anderen Membranpumpe 45 derart ausgelenkt, dass für deren ersten Arbeitsraum 59 ein Saughub von der Saugseite 11 her über das betreffende Saugventil 63 erfolgt. Bei der anderen Schaltstellung des Wegeventils 41 bei aus der in Fig. 1 gezeigten Stellung nach links verschobenem Ventilschieber 73 ist der Druckanschluss P mit dem Verbraucheranschluss A und über die Leitungsabschnitte 71 und 69 mit dem zweiten Arbeitsraum 61 der Membranpumpe 45 in Verbindung, während der zweite Arbeitsraum 61 der anderen Membranpumpe 43 über die Leitung 67 und den Arbeitsanschluss B und den Tankanschluss T des Wegeventils 41 mit der Tankrücklaufleitung 37 in Verbindung ist. Somit ergibt sich für den ersten Arbeitsraum 59 der Membranpumpe 43 der Saughub, während bei der anderen Membranpumpe 45 der Förderhub erfolgt.

Die Steuerung des Wegeventils 41 der Antriebseinheit 25 erfolgt hydraulisch mittels eines Steuerventils 75. Dieses weist als 5/2-Wegeventil einen Ventilschieber 77 auf, der, wie am besten aus Fig. 2 zu ersehen ist, für eine mechanische Betätigung mit dem Zapfen 55 der Membran 47 der Membranpumpe 45 verbunden ist. An dem in Fig. 2 linksseitig gelegenen Ende 79 des Ventilschiebers 77 stützt sich eine Druckfeder 85 ab, die den Schieber 77 für eine Bewegung nach rechts und damit eine Bewegung der Membran 47 der Membranpumpe 45 gegen die Koppelstange 57 und über diese wiederum die Membran 47 der anderen Membranpumpe 43 für eine Bewegung nach rechts vorspannt. Um die Membrane 47 hierbei jeweils in Anlage an der sich zwischen ihnen erstreckenden Koppelstange 57 zu halten, wirkt auf den Zapfen 55 der Membran 47 der anderen Membranpumpe 43 eine zweite Druckfeder 87 ein, so dass beide Membrane 47 kraftschlüssig an der Koppelstange 57 gehalten sind. Gleichzeitig hält die linksseitig gelegene Druckfeder 85 den Ventilschieber 77 in kraftschlüssiger Anlage am Zapfen 55 der Membran 47 der zugewandten Membranpumpe 45.

Für die hydraulische Ansteuerung des die Pumpeneinheit 5 betätigenden Wegeventils 41 sind die Stirnseiten 81 und 83 von dessen Ventilschieber 73 über Steuerleitungen 97 und 99 mit dem Steuerventil 75 verbunden.

Weitere Anschlüsse P, A und T des Steuerventils 75 sind mit den entsprechenden Anschlüssen des Wegeventils 41 der Antriebseinheit 25 in Verbindung. Die Anschlüsse am Steuerventil 75 sind relativ zu den Steuerkanten des Ventilschiebers 77 derart positioniert und mit der Antriebseinheit 25 verschaltet, dass der P-Anschluss bei Bewegungen des Schiebers 77 in der einen oder anderen Richtung im Wechsel über eine Steuerleitung 97 oder 99 mit der Stirnseite 81 oder 83 am Schieber 73 des Wegeventils 41 verbunden wird, um das Wegeventil 41 in die eine oder andere Schaltstellung zu bringen. Dabei ist in jeder Steuerleitung 97, 99 eine Blende 89 bzw. 91 als Drosselstelle eingefügt. Bei der Ausbildung des Wegeventils 41 als Wechselventil wird hierbei jeweils einer der zweiten Arbeitsräume 61 der Membranpumpeneinheit 5 mit der Druckseite 33 der Hydropumpe 27 verbunden, während der jeweils andere zweite Arbeitsraum 61 mit dem Tankanschluss T verbunden ist. Entsprechendes gilt für die die Steuerleitungen 97 und 99, von denen das Steuerventil 75 jeweils eine mit der Druckseite 33 und die jeweils andere mit der Tankrücklaufleitung 37 verbindet. Die Taktfrequenz der Hubbewegungen der Membrane 47 lässt sich durch den Volumenstrom einstellen. Um eine Präferenz für die Schaltstellung des Wegeventils 41 der Antriebseinheit 25 vorzugeben, weisen die druckwirksamen Flächen der Stirnseiten 81 und 83 des Ventilschiebers 73 eine unterschiedliche Größe auf, s. Fig. 2, aus der erkennbar ist, dass an der Stirnseite 81 die der Blende 89 zugewandte Fläche größer ist als der der Blende 91 an der Stirnseite 83 zugewandte Flächenbereich. Um auch bei Drucklosigkeit und Stillstand der Einrichtung eine definierte Schaltstellung des Wegeventils 41 vorzugeben, wie sie in Fig. 1 dargestellt ist, ist an der Stirnseite 83 eine zusätzlich zum Steuerdruck wirksame Feder 96 vorgesehen.

Im Betrieb ist der an der Arbeitseinheit 1 zur Verfügung stehende Versorgungsdruck, wie erwähnt, durch das Druckbegrenzungsventil 23 begrenzt. Ein den Versorgungsdruck erkennender Drucksensor 93 ist an der Eingangsleitung 19 auf der Reinseite des Filters 17 angeordnet. Ein mit der Rohseite des Filters 17 verbundener zweiter Drucksensor 95 erkennt die am Filter 17 im Betrieb herrschende Druckdifferenz zusammen mit dem ersten Sensor 93 und damit einen möglichen Verschmutzungsgrad des Filters 17. Während beim gezeigten Beispiel für die Betätigung der Pumpeneinheit 5 eine Antriebseinheit 25 mit einer Hydropumpe 27 vorgesehen ist, versteht es sich, dass für die Druckmittelbetätigung der Pumpeneinheit 5 andere, gegebenenfalls zur Verfügung stehende Druckquellen nutzbar sind, beispielsweise der Druck von Hydrauliksystemen, die in Gerätschaften, die einen mit einem SCR-System ausgerüsteten Verbrennungsmotor enthalten, vorhanden sind. Auch könnte der Betriebsöldruck eines betreffenden Verbrennungsmotors oder eine zur Verfügung stehende Druckluftquelle, beispielsweise bei einem pneumatischen Federungssystem, ausgenutzt werden.

## Patentansprüche

1. Einrichtung zur Bereitstellung von unter einem vorgebbaren Druck stehenden Fluiden für die Druckversorgung eines Abnehmers, wie einer Arbeitseinheit (1) eines SCR-Systems zur Abgasbehandlung von Verbrennungsmotoren, mit mindestens einer das betreffende Fluid aus einem Fluidvorrat (7) entnehmenden und dem Abnehmer zuführenden Pumpe (5), die ein Verdrängerelement (47) aufweist, das zur Erzeugung des Fluiddrucks in einem Arbeitsraum (59) bewegbar ist, wobei das Verdrängerelement (47) der jeweiligen Pumpe (5) mit seiner vom Arbeitsraum (59) des Fluids abgewandten Seite an einen zweiten Arbeitsraum (61) angrenzt, zu dem ein die Bewegung des Verdrängerelements (47) bewirkendes Druckmedium zuführbar ist, wobei die jeweilige Pumpe (5) als bewegbares Verdrängerelement eine den ersten (59) und den zweiten Arbeitsraum (61) voneinander trennende, bewegbare Membran (47) aufweist, und wobei eine Pumpeneinheit (5) mit zwei Membranpumpen (43, 45) vorgesehen ist, deren Membrane (47) miteinander mechanisch gekoppelt und deren erste (59) und zweite Arbeitsräume (61) derart angeordnet sind, dass dem Förderhub der einen Membran (47) der Ansaughub der jeweils gekoppelten anderen Membran (47) und umgekehrt entspricht, **dadurch gekennzeichnet, dass** die mechanische Kopplung der Membrane (47) derart kraftschlüssig (85, 87) ausgebildet ist, dass eine Volumenvergrößerung des ersten Arbeitsraums (59) jeder Membranpumpe (43, 45) gegen den Kraftschluss (85, 87) ohne Verkleinerung des ersten Arbeitsraums (59) der jeweils anderen Membranpumpe (43, 45) ermöglicht ist.

2. Einrichtung nach Anspruch 1, **dadurch gekennzeichnet, dass** dem zweiten Arbeitsraum der jeweiligen Pumpe (5) als Druckmedium eine Druckflüssigkeit zuführbar ist.

3. Einrichtung nach Anspruch 1 oder 2, **dadurch gekennzeichnet, dass** für einen hydraulischen Antrieb der jeweiligen Pumpe (5) eine Antriebseinheit (25) vorgesehen ist, die eine Hydropumpe (27) und eine Ventilanordnung (41) aufweist.

4. Einrichtung nach Anspruch 3, **dadurch gekennzeichnet, dass** die Ventilanordnung der Antriebseinheit ein 4/2-Wegeventil (41) aufweist, mittels dessen die Druckseite (33) der Hydropumpe (27) im Wechsel mit dem zweiten Arbeitsraum (61) der einen oder der anderen Membranpumpe (43, 45) verbindbar ist.

5. Einrichtung nach Anspruch 4, **dadurch gekennzeichnet, dass** das 4/2-Wegeventil (41) mittels eines Steuerventils (75) hydraulisch betätigbar ist, das seinerseits in Abhängigkeit von der Bewegung der Membrane (47) der Pumpen (43, 45) mechanisch betätigbar ist, um den Druck der Druckseite (33) der Hydropumpe (27) als Steuerdruck im Wechsel an die eine (81) oder die andere Stirnseite (83) des Ventilschiebers (73) des 4/2-Wegeventils (41) zu melden.

6. Einrichtung nach Anspruch 5, **dadurch gekennzeichnet, dass** das 4/2-Wegeventil (41) der Antriebseinheit (25) an den Stirnseiten (81, 83) seines Ventilschiebers (73), die mit dem vom Steuerventil (75) zugeführten Steuerdruck beaufschlagbar sind, unterschiedlich große druckwirksame Kolbenflächen aufweist und/oder dass an einer Stirnseite (83) zusätzlich zum Steuerdruck eine Federkraft (96) wirksam ist.

7. Einrichtung nach Anspruch 5 oder 6, **dadurch gekennzeichnet, dass** der Steuerdruck den Stirnseiten (81, 83) des Ventilschiebers (73) des 4/2-Wegeventils (41) über Drosselstellen (89, 91) zuführbar ist.

## Claims

1. A device for providing fluids under a predeterminable pressure for supplying pressure to a consumer such as a work unit (1) of an SCR system for exhaust gas treatment of internal combustion engines, comprising at least one pump (5) which removes the fluid in question from a fluid reservoir (7) and feeds the same to the consumer, which pump has a displacement element (47) which can be moved to generate the fluid pressure in a working chamber (59), the displacement element (47) of the respective pump (5) adjoining, with its side facing away from the working chamber (59) of the fluid, a second working chamber (61) to which a pressure medium causing the displacement element (47) to move can be fed, the respective pump (5) having a movable membrane (47) separating the first (59) and the second working chamber (61) from one another as a movable displacement element, and a pump unit (5) being provided with two membrane pumps (43, 45), the membranes (47) of which are coupled to one another mechanically, and the first (59) and the second working chambers (61) of which are arranged such that the intake stroke of the respectively coupled other membrane (47) corresponds to the delivery stroke of the one membrane (47) and vice versa, **characterised in that** the mechanical coupling of the membranes (47) is designed with force-fit (85, 87) such that it is made possible to increase the volume of the first working chamber (59) of each membrane pump (43, 45) against the force closure (85, 87) without reducing the first working chamber (59) of the respective other membrane pump (43, 45).

2. The device according to Claim 1, **characterised in that** a hydraulic fluid can be fed to the second working chamber of the respective pump (5) as pressurising medium.

3. The device according to Claim 1 or 2, **characterised in that** there is provided as a hydraulic drive of the respective pump (5) a drive unit (25) which has a hydraulic pump (27) and a valve arrangement (41).

4. The device according to Claim 3, **characterised in that** the valve arrangement of the drive unit has a 4/2-way valve (41) by means of which the pressure side (33) of the hydraulic pump (27) can alternately be connected to the second working chamber (61) of one or the other membrane pump (43, 45).

5. The device according to Claim 4, **characterised in that** the 4/2-way valve (41) can be actuated hydraulically by means of a control valve (75) which, on its part, can be actuated mechanically dependently upon the movement of the membranes (47) of the pumps (43, 45) in order to signal the pressure of the pressure side (33) of the hydraulic pump (27) as control pressure alternately to one (81) or the other face side (83) of the valve spool (73) of the 4/2-way valve (41).

6. The device according to Claim 5, **characterised in that** the 4/2-way valve (41) of the drive unit (25) on the face sides (81, 83) of its valve spool (73), to which control pressure fed from the control valve (75) can be applied, has differently sized pressure-effective piston surfaces and/or that in addition to the control pressure, a spring force (96) also acts on one face side (83).

7. The device according to Claim 5 or 6, **characterised in that** the control pressure can be fed to the face sides (81, 83) of the valve spool (73) of the 4/2-way valve (41) via throttle points (89, 91).

## Revendications

1. Dispositif pour procurer des fluides sous une pression pouvant être donnée à l'avance pour l'alimentation sous pression d'un utilisateur, comme une unité (1) de travail d'un système SCR de traitement des gaz d'échappement de moteur à combustion, comprenant au moins une pompe (5), qui prélève le fluide concerné d'un réservoir (7) de fluide et l'envoie à l'utilisateur et qui a un élément (47) de refoulement, qui, pour produire la pression du fluide, peut être déplacé dans un espace (59) de travail, l'élément (47) de refoulement de la pompe (5) étant voisin, par son côté éloigné de l'espace (59) de travail du fluide, d'un deuxième espace (61) de travail auquel peut être envoyé un fluide sous pression provoquant le déplacement de l'élément (47) de refoulement, la pompe (5) ayant, comme élément de refoulement pouvant être déplacé, une membrane (47), qui peut être déplacée et qui sépare l'un de l'autre le premier (59) et le deuxième espaces (61) de travail, et dans lequel il est prévu un groupe (5) de pompage ayant deux pompes (43, 45) à membrane, dont les membranes (47) sont accouplées mécaniquement entre elles et dont les premier (59) et deuxième espaces (61) de travail sont disposés de manière à ce qu'à la course de refoulement de l'une des membranes (47) corresponde la course d'aspiration de l'autre membrane (47) couplée et inversement,
**caractérisé en ce que** l'accouplement mécanique des membranes (47) est constitué à coopération de force (85, 87) de manière à ce qu'un agrandissement du volume du premier espace (59) de travail de chaque pompe (43, 45) à membrane soit possible à l'encontre de la coopération de force (85, 87) sans diminution du premier espace (59) de travail de l'autre pompe (43, 45) à membrane.

2. Dispositif suivant la revendication 1, **caractérisé en ce qu'**un liquide sous pression peut être envoyé comme fluide sous pression au deuxième espace de travail de la pompe (5) respective.

3. Dispositif suivant la revendication 1 ou 2, **caractérisé en ce qu'**il est prévu, pour un entraînement hydraulique de la pompe (5) respective, un groupe (25) d'entraînement, qui a une pompe (27) hydraulique et un agencement (41) de vanne.

4. Dispositif suivant la revendication 3, **caractérisé en ce que** l'agencement de vanne du groupe d'entraînement a une vanne (41) à 4/2 voies, au moyen de laquelle le côté (33) refoulement de la pompe (27) hydraulique peut être relié en alternance avec le deuxième espace (61) de travail de l'une ou de l'autre pompe (43, 45) à membrane.

5. Dispositif suivant la revendication 4, **caractérisé en ce que** la vanne (41) à 4/2 voies peut être actionnée hydrauliquement au moyen d'une vanne (75) pilote, qui, pour sa part, peut être actionnée mécaniquement en fonction du déplacement des membranes (47) des pompes (43, 45), pour signaler la pression du côté (33) refoulement de la pompe (27) hydraulique, comme pression de commande à l'un (81) ou à l'autre côté (83) frontal du tiroir (73) de la vanne (41) à 4/2 voies.

6. Dispositif suivant la revendication 5, **caractérisé en ce que** la vanne (41) à 4/2 voies a des surfaces de piston efficaces en pression de dimensions différentes sur les côtés (81, 83) frontaux de son tiroir (73) de vanne, qui peuvent être soumises à la pression de commande appliquée par la vanne (75) pilote et/ou **en ce que** une force (96) de ressort est efficace en plus de la pression de commande sur un côté (83) frontal.

7. Dispositif suivant la revendication 5 ou 6, **caractérisé en ce que** la pression de commande peut être appliquée aux côtés (81, 83) frontaux du tiroir (73) de la vanne (41) à 4/2 voies par des points (89, 91) d'étranglement.
